# EUROPEAN PATENT APPLICATION

(11) **EP 2 772 865 A1**
(43) Date of publication of application: **03.09.2014**
(21) Application number: 14156923.6
(22) Date of filing: 27.02.2014
(51) Int. Cl.: G06F 17/30, G06Q 30/06

(54) **A method for collecting online analytics data using server clusters**

(30) Priority: 28.02.2013 US 201313780839
(71) Applicant: Sitecore A/S, 1606 Copenhagen V (DK)
(72) Inventor: Seifert, Michael, 1606 København V (DK); Kostenko, Dmytro, 1606 København V (DK)
(74) Representative: Inspicos A/S

(57) **Abstract**

Online analytics data is collected by means of the servers of the server cluster, and the collected information is stored in a cluster cache database of the server cluster. When the visit is completed, the collected information is communicated to a central database. The system is scalable and communication between the server clusters and the central database is minimised.

## Description

### FIELD OF THE INVENTION

The present invention relates to a method and an apparatus for collecting online analytics data, using a system comprising two or more server clusters, and a central database. The method and the apparatus of the invention provide scalability and allow large amounts of online analytics data to be collected, while maintaining low response times of the system, as well as facilitating using previously stored analytics data to affect, in real-time, the experience of a visitor visiting the website, and possibly even using marketing automation states and plans.

### BACKGROUND OF THE INVENTION

It is sometimes desirable for website owners to obtain knowledge regarding the behaviour of visitors visiting the website. To this end an online analytics service may be used for collecting online analytics data during the visits performed by the visitors. The online analytics service may be operated from a server which is separate from a server delivering the content of the website. In this case the online analytics data is collected and stored independently of the delivery of content to the visitors. This may be a great strategy for collecting analytics data, but it has its shortcomings if one wishes that past knowledge and/or current visitor behaviour shall affect which content is shown to the visitors visiting the website, since the collected information is not readily available to the severs delivering the content to the visitors.

Websites having a low number of visitors may supply content to visitors by means of a single server or by means of a single server cluster. Furthermore, the low number of visitors allows online analytics data to be easily collected, either by means of the server or server cluster, or using a separate server as described above. This is because bottlenecks introduced when the analytics data is communicated to a central database are insignificant, due to the low number of visitors.

Websites having a high number of visitors, on the other hand, may supply content to visitors by means of several servers, e.g. in the form of one or more server clusters, in order to ensure that content can be supplied to the high number of visitors without introducing delays in delivery of content or overload of the system. Thus, using several servers ensures scalability of the system.

If, additionally, the goal of the analytics system is not to just collect aggregated data, but to collect detailed information about a visit, then the bottlenecks introduced become even more pronounced.

When online analytics data is collected in a system comprising several servers supplying content to a high number of visitors, bottlenecks are introduced due to the vast amount of data originating from the high number of visitors being communicated to a central database, if the analytics data is collected by means of the servers which supply the content to the visitors. As an alternative, the online analytics data may be collected by means of a separate system, thereby introducing the disadvantage that the collected data will not be readily available to the servers delivering content to the visitors, as described above.

US 8,156,216 discloses a distributed, redundant, multi-homed system which collects and aggregates website usage information. A content server delivers content to visitors of a website, and a separate data collection system collects the website usage information. Two or more data collection nodes collect and time-stamp information from users in a wide variety of geographical locations. Data collected by the individual data collection nodes is aggregated at a master processing centre, and subjected to statistical analysis in order to generate complete and accurate reports regarding website traffic.

### DESCRIPTION OF THE INVENTION

It is an object of embodiments of the invention to provide a method for collecting online analytics data which allows the collection of data to be scaled to match the number of visitors to a website.

It is a further object of embodiments of the invention to provide a method for collecting online analytics data, in which bottlenecks introduced in delivery of content to visitors are minimised.

It is an even further object of embodiments of the invention to provide a method for collecting online analytics data, in which delivery of content to the visitors can be real-time adjusted to collected analytics data.

It is an even further object of embodiments of the invention to provide a system for collecting online analytics data which is scalable to match the number of visitors to a website. It is an even further object of embodiments of the invention to provide a system for collecting online analytics data which is capable of storing detailed information about each online visit.

According to a first aspect the invention provides a method for collecting online analytics data, using a system comprising two or more server clusters, each server cluster comprising two or more servers and at least one cluster cache database, and a central database, the method comprising the steps of:
- a visitor accessing a website, and requesting content of the website,
- the system allocating the visitor to one of the server clusters,
- the system delivering requested content to the visitor, via one or more of the servers of the server cluster to which the visitor is allocated,
- monitoring navigations and/or actions performed by the visitor at the website, thereby collecting information regarding navigations and/or actions performed by the visitor, by means of the servers of the server cluster to which the visitor is allocated, and storing said information in the corresponding cluster cache database, and
- when the visit by the visitor to the website has been completed, communicating the collected and stored information to the central database, and storing the collected information in the central database.

In the present context the term 'online analytics data' should be interpreted to mean data which is collected online, and which can be used for analysing traffic to a website, including amount of traffic, origin of traffic, visitor behaviour, campaigns triggered, webpages viewed, sequence of webpages viewed, assets downloaded, videos watched, forms filled in, and/or any other online interaction, etc.

The system used for performing the method according to the first aspect of the invention comprises two or more server clusters. In the present context the term 'server cluster' should be interpreted to mean a group of two or more content delivery servers being interlinked in such a manner that they, to a visitor accessing one of the servers, appear as one server. Thus, each server cluster comprises two or more servers. Furthermore, the two or more server clusters cooperate in such a manner that load balancing can be obtained. The server clusters may be arranged remotely relative to each other, e.g. in geographically distinct regions. For instance, 10 server clusters may be located in the US, 2 server clusters in United Kingdom, 2 server clusters in Asia, and 2 server clusters in Australia. The servers of a given server cluster may further be arranged in server groups. In this case, the servers of each server group may be arranged to serve a particular website. This allows several websites to be served by means of the system.

Each server cluster further comprises a cluster cache database. Thus, each of the servers of a given server cluster is able to access the cluster cache database of that server cluster. The cluster cache database is able to store data, e.g. supplied by the servers of the server cluster, at least temporarily.

The system further comprises a central database. The central database is able to communicate with the servers of each of the server clusters, and possibly also with the cluster cache databases of the server clusters. Thus, information and/or data may be communicated from the server clusters, and possibly the cluster cache databases, to the central database, and/or from the central database to the server clusters, and possibly the the cluster cache databases.

The central database may be arranged remotely relative to the server clusters. In this case communication between the server clusters and the central database may take place via a computer network, such as the Internet. For instance, the server clusters may be distributed geographically as described above, and the central database may be located in the US. In this case, the central database may be connected to the same infrastructure as the server clusters located in the US. However, it could also be envisaged that the central database is connected to a different infrastructure.

According to the method of the first aspect of the invention, a visitor initially accesses a website and requests content of the website. In the present context the term 'website' should be interpreted to mean a collection of related web pages, images, web services (API), videos or other digital assets being addressed relative to a common Uniform Resource Locator (URL). The web pages of the website may advantageously be designed, presented and linked together to form a logical information resource and/or transaction initiation function.

Next, the system allocates the visitor to one of the server clusters. This may, e.g., be performed in accordance with a load balancing principle, which is known per se. Once the visitor has been allocated to a server cluster, the system delivers requested content of the website to the visitor, via one or more of the servers of the server cluster to which the visitor is allocated.

While the content is delivered to the visitor, navigations and/or actions performed by the visitor at the website are monitored. Thereby information regarding the performed navigations and/or actions is collected, i.e. online analytics data is collected. This is done by means of the servers of the server cluster to which the visitor is allocated. Thus, the collection of online analytics data is performed by means of the servers which deliver the content to the visitor. The collected information is stored in the corresponding cluster cache database. Thus, the collected information is stored centrally with respect to the server cluster, i.e. it is stored in the cluster cache database which can be accessed by all of the servers of that server cluster, and all servers of a given server cluster stores the collected information in the same cluster cache database. However, the collected information is stored locally with respect to the system, i.e. it is stored at the server cluster where it is collected, rather than in the central database. Thereby communication of the collected information, during collection of the information, is limited to communication within the server cluster, notably between the respective servers and the cluster cache database.

Finally, when the visit by the visitor has been completed, the collected and stored information is communicated to the central database, where it is stored. The communication may take place via a computer network, such as the Internet. In the case of a temporary large pressure on the network, the communication to the central database may be deferred.

Thus, the information regarding the visits, i.e. the online analytics data, is collected locally at the server clusters which deliver the content of the website to the visitors, and subsequently the information is stored centrally at the central database. There the complete information is available centrally. However, since the information is communicated to the central database upon completion of the visit, only one batch of information is communicated for each visit. Thereby the communication between the server clusters and the central database is minimised, and delays in delivery of content is substantially avoided. Furthermore, the system is scalable, since it is possible to simply add further server clusters without increasing the communication load. This is a great advantage.

It should be noted that the system used for performing the method according to the first aspect of the invention may be designed in such a manner that the server clusters are arranged in groups, each group of server clusters communicating with a central database associated with that group of server clusters. The central databases of the respective groups of server clusters may then communicate with an additional central database, where all of the collected information is eventually stored, e.g. at regular time intervals. Such a design will reduce the communication load on the additional database, and allow for even further scaling of the system.

It is an advantage that the online analytics data is collected using the servers which deliver the content of the website to the visitors, because the collected data is thereby readily available to the servers delivering the content to the visitors. This allows the servers to, in real-time, personalize the content delivered to a visitor based on, and in accordance with, the visitor's current behaviour.

The method may further comprise the step of deleting the collected information from the cluster cache database when the information has been communicated to the central database. According to this embodiment, no information is permanently stored in the cluster cache databases of the server clusters. Once the collected information has been communicated to the central database, there is no longer a purpose of storing the information in the cluster cache database, since any analysis or data processing of the information will take place centrally. Accordingly, the storage capacity of the cluster cache databases can be reduced, since the amount of data being stored there at any given time will be relatively low.

The method may further comprise the steps of:
- after allocating the visitor to a server cluster, one or more of the servers of the server cluster forwarding a request to the central database in order to identify the visitor, and
- the central database returning information regarding the visitor to the server cluster.

According to this embodiment, the central database may contain information regarding the visitor, such as identification of the visitor, (past) geographical location of the visitor, information regarding previous visits to the website by the visitor, etc. Such information may be relevant to the servers of the server cluster which the visitor is allocated to, i.e. the servers which are delivering the content of the website to the visitor. Accordingly, once a visitor has been allocated to a given server cluster, the server cluster may advantageously obtain the relevant information from the central database. For instance, the server cluster may use the obtained information to, possibly in real-time, adjust the content delivered to the visitor in order to match a profile of the visitor.

The method may further comprise the step of storing the received information regarding the visitor in the cluster cache database of the server cluster, along with the collected information regarding navigations and/or actions performed by the visitor. According to this embodiment, the information received from the central database is available to the servers of the server cluster during the entire visit. The information regarding the visitor received by the server cluster in this manner may be updated during the visit. In this case, the updated information regarding the visitor may be communicated along with the collected information, when the collected information is communicated from the cluster cache database to the central database when the visit is completed. Thereby a combined 'package' of information including the collected information regarding navigations and/or actions performed by the visitor and the updated information regarding the visitor previously received from the central database, is communicated to the central database and stored there. In the case that the information regarding the visitor is not updated during the visit there is no need to communicate the information regarding the visitor to the central database when the visit is completed, since this information will already be available in the central database. However, the collected information may be stored along with the information regarding the visitor, which is available in the central database, and possibly added to the information regarding the visitor. In this case, the collected information may be included in the information which is supplied to a server cluster the next time the visitor accesses the website.

One advantage of having access, at the server cluster, to both the (historical) information from the central database, as well as the currently collected information during a visit is that it is possible to personalize content delivered to the visitors, in real-time, based on past knowledge as well as current behaviour.

The information returned by the central database may include engagement automation information. In this case the engagement automation information regarding the visitor which is available at the central database is temporarily borrowed by the server cluster to which the visitor is allocated. The engagement automation information is then updated, by the servers of the server cluster, during the visit of the visitor, and the updated engagement automation information is communicated to the central database when the visit is completed.

Engagement automation may be or form part of a marketing automation platform. A marketing automation platform is a software platform designed for marketing departments and organizations to automate repetitive tasks and automatically trigger events that might e.g. send an email to a customer based on certain criteria being reached. Marketing departments, consultants and part-time marketing employees benefit by specifying criteria and outcomes for tasks and processes which are then interpreted, stored and executed by software, thereby increasing efficiency and reducing human error. Marketing automation has a focus on moving leads from the top of a marketing funnel through to becoming sales-ready leads further down the funnel. Prospects might be scored, based on their activities, and then presented drip campaign messaging via email and social channels, thus nurturing them from first interest through to sale.

Engagement automation maintains one or more (real-time) states for one or more automation plans for each visitor. The actions of a visitor might change the automation states in one or more automation plans. It is advantageous that information regarding the engagement state of a visitor is available as close to the delivery servers as possible so that a minimal delay is introduced. If the server cluster has to communicate with the central database in order to access and possibly update the engagement automation information, the visitor could experience noticeable slow response during the visit.

The method may further comprise the steps of:
- the visitor accessing the website, thereby starting a second session,
- the system allocating the visitor to one of the server clusters,
- the server cluster to which the visitor is allocated requesting information regarding the visitor from the central database,
- the central database returning information regarding which server cluster the first session of the visitor is allocated to, and storing said information in the cluster cache database of the server cluster having the second session of the visitor allocated thereto.

Sometimes the same visitor may access the website simultaneously from two or more distinct devices, thereby running two or more sessions at the website simultaneously. This may, e.g., be the case if the visitor is actually two or more persons using the same user profile and/or the same login information. When this happens, it may be desirable to coordinate the information collected during all the simultaneous sessions.

Thus, when a visitor accesses the website, thereby starting a session, and the visitor is therefore allocated to a server cluster, as described above, the server cluster requests information regarding the visitor from the central database. If another session is already running, the central database will know, because it has already provided information regarding the visitor to the cluster server to which the first session was allocated, but it has not yet received any collected information. Furthermore, the central database also knows which server cluster the first session is allocated to. Therefore the central database is able to provide this information to the server cluster to which the second session is allocated. The information is then stored in the cluster cache database of the server cluster having the second session of the visitor allocated thereto.

It should be noted that in the case that the second session is allocated to the same server cluster as the first session, it may not be required to store the information regarding which server cluster the first session is allocated to in the cluster cache database. Instead the central database may simply inform the server cluster that a second session has been started, and the server cluster is thereby able to coordinate the information collected during the two sessions. As an alternative, no additional communication to the central database may be required in this case. Instead the servers of the server cluster will simply find the corresponding visitor information in the cluster cache database.

The method may further comprise the step of the server cluster having the second session of the visitor allocated thereto requesting information regarding the visitor from the server cluster having the first session of the visitor allocated thereto. According to this embodiment, the server cluster having the first session of the visitor allocated thereto temporarily holds the information regarding the visitor. Therefore, the server cluster having the second session of the visitor allocated thereto is not able to obtain information regarding the visitor from the central database. Accordingly, when the server cluster having the second session allocated thereto needs the information regarding the visitor, it has to request the information from the server cluster having the first session allocated thereto. In response thereto, the server cluster having the first session allocated thereto may provide the required information to the server cluster having the second session allocated thereto.

Alternatively or additionally, the method may further comprise the step of storing information regarding the second session of the visitor in the cluster cache database of the server cluster having the first session of the visitor allocated thereto, or moving the visitor to said server cluster. According to this embodiment, the server cluster having the second session allocated thereto may 'borrow' the cluster cache database of the server cluster having the first session allocated thereto for the purpose of storing collected information regarding the second session. Thereby the information collected during the second session is automatically stored along with the information collected during the first session, and it is thereby ensured that the information collected during both sessions is associated with the visitor and stored together in the central database when the visits are completed. As an alternative, the second session may be moved to the server cluster having the first session allocated thereto. Thereby both sessions will be allocated to the same server cluster, and the information collected during both sessions will automatically be stored together in the cluster cache database of that server cluster.

According to one embodiment, engagement automation information regarding the visitor may be stored at the server cluster having the first session of the visitor allocated thereto, and the method may further comprise the step of the server cluster having the second session of the visitor allocated thereto requesting engagement automation information from the server cluster having the first session of the visitor allocated thereto. According to this embodiment, the server cluster having the first session allocated thereto temporarily holds the engagement automation information regarding the visitor. Therefore the server cluster having the second session allocated thereto will not be able to obtain the engagement automation information regarding the visitor from the central database. Therefore, when required, the server cluster having the second session allocated thereto must request this information from the server cluster having the first session allocated thereto, similar to what is described above.

The method may further comprise the step of analysing information regarding the visitor stored in the central database. According to this embodiment, the collected analytics data is analysed, e.g. with the purpose of extracting useful information.

The method may further comprise the step of storing aggregated information regarding the visitor in the central database, or in one or more aggregation database(s). Storing aggregated information in this manner makes it easier to perform the analysis on the information, because the information regarding a particular visitor is more readily available. This is in particular an advantage when the number of visitors is high, and the total amount of collected data is therefore extensive. Storing the aggregated information in one or more aggregation database(s) has the advantage that the analysis will be performed using another database than the central database, and the analysis process will therefore not put a high load on the central database. Furthermore, the second aggregation database may be a group of several databases arranged in a load sharing manner.

The method may further comprise the step of displaying analysis results and/or aggregated information to an analyst or business user. According to this embodiment, the analyst or business user is presented with the analysis result or the aggregated information. This allows the analyst or business user to use the analysis result or information, e.g. in order to perform modifications to the website in order to match the desires of the visitors more accurately, or in order to encourage the visitors to behave in a manner which helps the website owner in achieving business goals.

The method may further comprise the step of automatically modifying the website based on the result of the analysis and/or aggregated information. According to this embodiment, the adjustments to the website described above are performed automatically, i.e. without the intervention of an analyst, business user or website administrator. In this case a notification regarding the performed modifications may be supplied to an analyst, a business user or a website administrator.

The step of monitoring navigations and/or actions may comprise collecting information regarding an outcome of interactions between the visitor and an owner of the website, and the information communicated to the central database may include information regarding the outcome. The outcome may, e.g., be the visitor placing a purchase order for a product or a service, the visitor closing a sales agreement or a service agreement, the visitor signing up for a newsletter or unsubscribing from a newsletter, the visitor filling in a form, the visitor requesting a live demo, the visitor abandoning contact with the website, or any other suitable kind of outcome. Furthermore, the information regarding the outcome may include information regarding a value or an estimated loss associated with the outcome, such as a sales price, a revenue, estimated value generated for the website owner during the visit, etc.

The method may further comprise the step of storing information regarding offline interactions and/or outcomes of online and/or offline interactions between the visitor and an owner of the website in the central database. According to this embodiment, this additional information can be taken into account, e.g. during analysis of the stored information. Thereby a more complete picture of the visitor is obtained.

According to a second aspect the invention provides a system for collecting online analytics data, the system comprising:
- two or more server clusters, each server cluster comprising:
   - two or more servers, said servers being arranged to deliver content of at least one website to visitors visiting the website(s), and to collect information regarding navigations and/or actions performed by visitors visiting the website(s), and
   - a cluster cache database,
the system further comprising:
- a central database arranged to communicate with each of the server clusters, and to store information regarding navigations and/or actions performed by visitors visiting the website(s), said information being collected by the servers of the server clusters.

It is noted that a person skilled in the art would readily recognise that any feature described in combination with the first aspect of the invention could also be combined with the second aspect of the invention, and vice versa. Thus, the system according to the second aspect of the invention may advantageously be used for performing the method according to the first aspect of the invention, and the remarks set forth above are equally applicable here.

The servers of the server clusters may be arranged in one or more server groups. In this case, the servers of each server group may be arranged to deliver content of a specific website. This allows two or more different websites to be served to visitors by means of a single system.

The central database may further be arranged to store engagement automation information.

The central database may be arranged to communicate information regarding visitors visiting the website to the server clusters upon request.

The cluster cache database may be or form part of a session state server. In this case the usual session state information can be combined with the cluster cache for the visitor information. A session state database is often used in server clusters. The advantage of combining the two is that complexity and costs of the system are reduced.

### BRIEF DESCRIPTION OF THE DRAWINGS

The invention will now be described in further detail with reference to the accompanying drawings in which
Fig. 1 is a diagrammatic view of a system according to a first embodiment of the invention,
Fig. 2 is a diagrammatic view of a system according to a second embodiment of the invention,
Fig. 3 is a diagrammatic view of a system according to a third embodiment of the invention,
Fig. 4 is a flow diagram illustrating a method according to an embodiment of the invention,
Fig. 5 is a flow diagram illustrating a method according to an alternative embodiment of the invention, and
Fig. 6 is a diagrammatic view of a system according to a fourth embodiment of the invention.

### DETAILED DESCRIPTION OF THE DRAWINGS

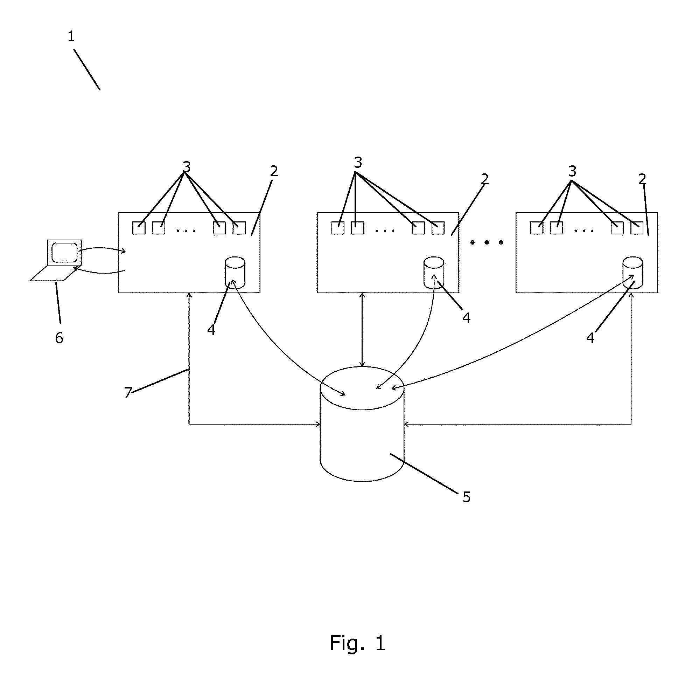

Fig. 1 is a diagrammatic view of a system 1 according to a first embodiment of the invention. The system 1 of Fig. 1 is suitable for collecting online analytics data. The system comprises a number of server clusters 2, three of which are shown. It should be noted that the system 1 could comprise two server clusters 2, or it could comprise four or more server clusters 2. Each server cluster 2 comprises a plurality of servers 3 and a cluster cache database 4. Four servers 3 are illustrated in each server cluster 2, but it should be noted that more servers 3 could be present in one or more of the server clusters 2, and that one or more of the server clusters 2 may comprise two or three servers 3. Similarly, one cluster cache database 4 is illustrated in each server cluster 2, but is should be noted that one or more of the server clusters 2 could comprise two or more cluster cache databases 4.

The system 1 further comprises a central database 5 arranged to communicate with each of the server clusters 2. The system of Fig. 1 may be operated in the following manner.

A visitor accesses a website via a client device 6. In Fig. 1 the client device 6 is illustrated as a personal computer (PC), but it should be noted that the client device 6 could alternatively be a cell phone, a tablet, a television, or any other suitable kind of client device allowing the visitor to access the website.

The system 1 then allocates the visitor to one of the server clusters 2, and requested content of the website is delivered to the client device 6, via the servers 3 of the server cluster 2 to which the visitor is allocated. The server cluster 2 then requests information regarding the visitor from the central database 5, and the central database 5 returns the requested information to the server cluster 2. This is illustrated by arrow 7. Thus, during the visit, the server cluster 2 holds relevant information regarding the visitor, and this information is therefore available to the servers 3 of the server cluster 2, without requiring communication between the server cluster 2 and the central database 5 during the visit.

During the visit, the servers 3 of the server cluster 2 to which the visitor is allocated monitor the navigations and/or actions performed by the visitor on the website. Thereby online analytics data regarding the visit and/or the visitor is collected. The collected information is stored in the cluster cache database 4 of the server cluster 2 to which the visitor is allocated. Thus, the collected information is stored 'locally' in the sense that the collection of information does not require any communication between the server cluster 2 and the central database 5 during the visit.

When the visit is completed, the collected information is communicated from the cluster cache database 4 to the central database 5. Thus, information collected during all visits to the website is eventually stored in the central database 5, regardless of which server cluster 2 the individual visit was allocated to. However, the communication between the server clusters 2 and the central database 5 is minimised to only three communications per visit, i.e. the request from the server cluster 2 to the central database 5 for information regarding the visitor, the central database 5 returning this information, and the cluster cache database 4 communicating the information collected during the visit to the central database 5. This allows the system 1 to be scaled to handle any number of possible visitors, simply by adding more server clusters 2, and the responsiveness of the system 1 will not be limited by the communication to and from the central database 5.

The information may subsequently be deleted from the cluster cache database 4 in order to minimise the required storage capacity of the cluster cache database 4.

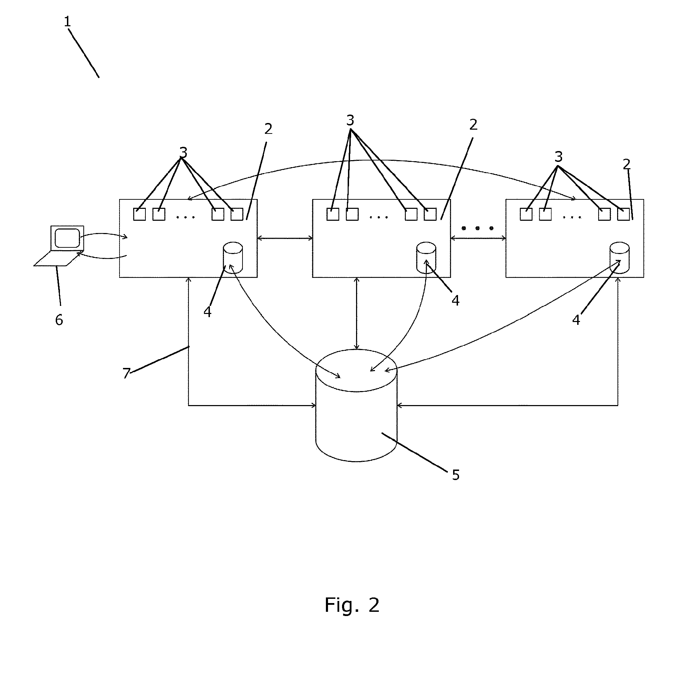

Fig. 2 is a diagrammatic view of a system 1 according to a second embodiment of the invention. The system 1 of Fig. 2 is very similar to the system 1 of Fig. 1, and it will therefore not be described in detail here.

In Fig. 2 the server clusters 2 are capable of communicating with each other. This may, e.g., be an advantage in the case that a visitor, which already has a session running, accesses the website from a different client device, thereby starting a second session. The second session may be allocated to a different server cluster 2 than the first session. When the server cluster 2 to which the second session is allocated requests information regarding the visitor from the central database 5, as described above, the central database 5 knows that the first session is still running, and which server cluster 2 the first session is allocated to. Therefore, instead of providing the requested information to the server cluster 2 having the second session allocated thereto, the central database 5 provides information regarding which server cluster 2 the first session is allocated to. Thus, the server cluster 2 having the second session allocated thereto knows that another session from the visitor, i.e. the first session, is currently running, and it knows which server cluster 2 this session is allocated to.

As and when the server cluster 2 having the second session allocated thereto needs the information regarding the visitor, it contacts the server cluster 2 having the first session allocated thereto. This server cluster 2 holds the required information, since it was communicated to it by the central database 5 when the first session was started.

The server cluster 2 having the second session allocated thereto may then store information collected during the visit of the second session in the cluster cache database 4 of the server cluster 2 having the first session allocated thereto. Or the second session may be reallocated to the server cluster 2 having the first session allocated thereto. Or the information collected during the visit of the second session may simply be coordinated with the information collected during the visit of the first session. In any event, the information collected during the visit of the first session as well as the information collected during the visit of the second session will be associated with the visitor, and will eventually be stored together in the central database 5.

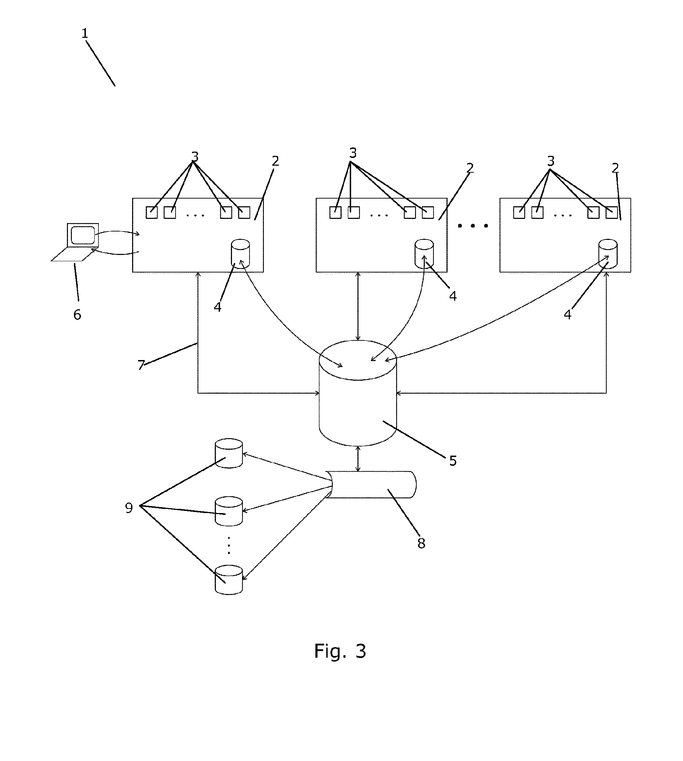

Fig. 3 is a diagrammatic view of a system 1 according to a third embodiment of the invention. The system 1 of Fig. 3 is very similar to the system 1 of Fig. 1, and it will therefore not be described in detail here.

The system 1 of Fig. 3 further comprises an aggregator 8 and a number of aggregator databases 9, three of which are shown. It should be noted that the system 1 could also comprise only one or two aggregator databases 9, or the system 1 could comprise four or more aggregator databases 9. The aggregator 8 is arranged to communicate with the central database 5 and with each of the aggregator databases 9.

The aggregator 8 receives aggregated information from the central database 5. The aggregator 8 may perform analysis on the received aggregated information and possibly display analysis results and/or aggregated information to a user, such as an analyst or a business user.

The aggregator 8 further communicates aggregated information and/or analysis results to the aggregator databases 9, where it is stored.

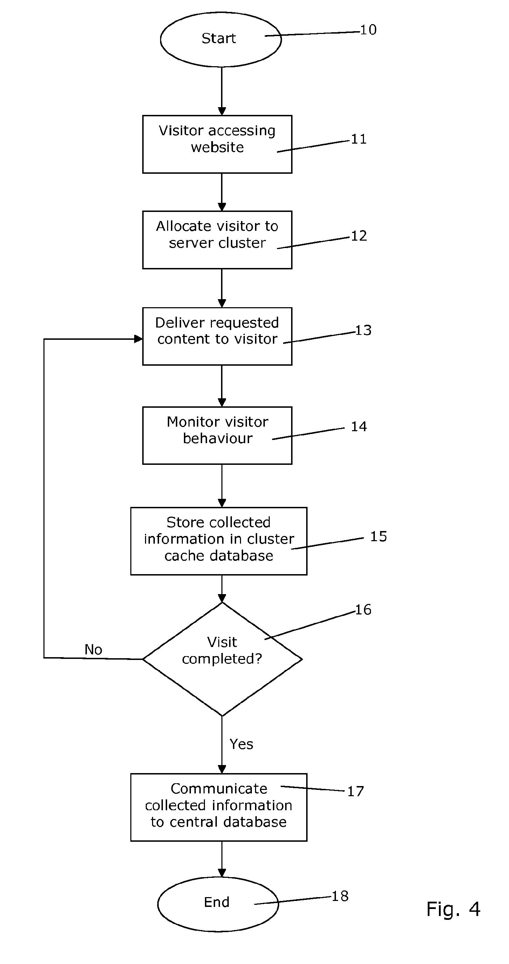

Fig. 4 is a flow diagram illustrating a method according to an embodiment of the invention. The method may advantageously be performed by means of one of the systems illustrated in Figs. 1-3.

The process is started at step 10. At step 11 a visitor accesses a website, and at step 12 the visitor is allocated to a server cluster. At step 13 requested content of the website is delivered to the visitor, via the servers of the server cluster to which the visitor was allocated at step 12.

During the visit, i.e. while the website content is delivered to the visitor, the behaviour of the visitor is monitored, at step 14. This includes monitoring navigations and/or actions performed at the website by the visitor during the visit. This is performed by means of the servers of the server cluster, i.e. by means of the servers which deliver the content to the visitor. Thus, online analytics data is collected by means of the servers which deliver content to the visitor. At step 15, the information collected at step 14 is stored in a cluster cache database of the server cluster to which the visitor is allocated. Thus, the collected information is stored locally at the server cluster during the visit.

At step 16 it is investigated whether or not the visit is completed. If this is not the case, the process is returned to step 13 for continued monitoring of the visitor behaviour.

If step 16 reveals that the visit has been completed, the process is forwarded to step 17, where the cluster cache database communicates the information which has been collected and stored in the cluster cache database during the visit to a central database. Finally, the process is ended at step 18.

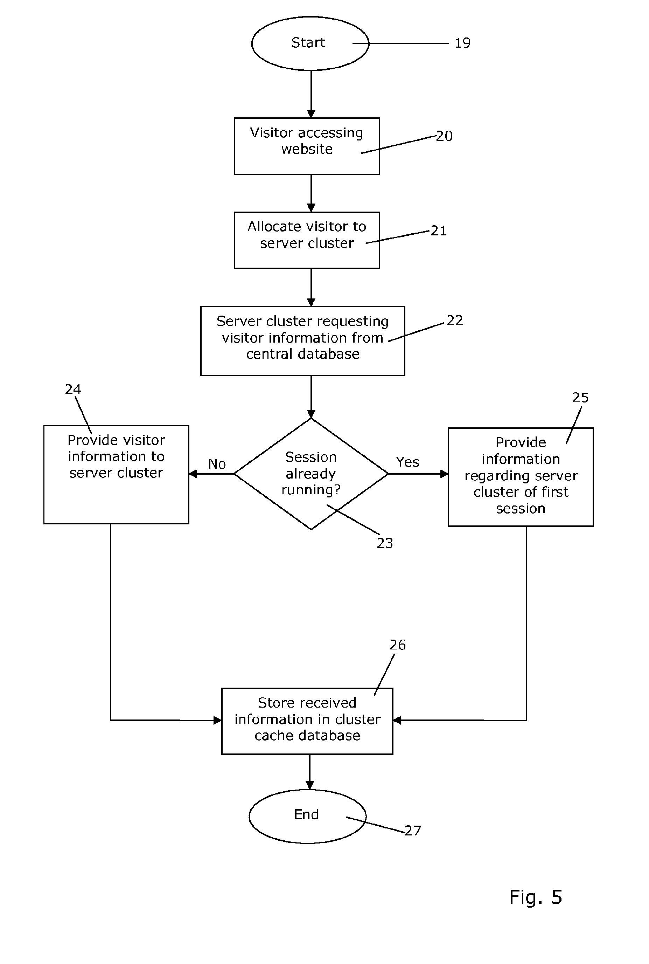

Fig. 5 is a flow diagram illustrating a method according to an alternative embodiment of the invention. The method may advantageously be performed by means of one of the systems illustrated in Figs. 1-3.

The process is started at step 19. At step 20 a visitor accesses a website, and at step 21 the visitor is allocated to a server cluster, similar to the steps 11 and 12 illustrated in Fig. 4 and described above.

At step 22 the server cluster to which the visitor is allocated requests information regarding the visitor from a central database. Upon receiving this request the central database, at step 23, investigates whether or not another session of the visitor is already running. If this is not the case, i.e. if the current session is the only session of the visitor at the current time, the process is forwarded to step 24, where the central database provides the requested information regarding the visitor to the server cluster.

If step 23 reveals that another session for the visitor is already running, i.e. a first session, the current session being a second session, the central database will not provide the requested information regarding the visitor to the server cluster. Instead the process is forwarded to step 25, where the central database instead provides information to the server cluster regarding which server cluster the first session is allocated to.

When the server cluster has received information from the central database, regardless of whether it receives information regarding the visitor at step 24 or information regarding which server cluster the first session is allocated to at step 25, the received information is stored in a cluster cache database of the server cluster at step 26. Finally, the process is ended at step 27.

Subsequently, online analytics data regarding the visit may be collected, e.g. in the manner described above with reference to Fig. 4.

When another session is already running, and the server cluster is therefore provided with information regarding which server the first session is allocated to, the server cluster can use this information in the following manner. When the information regarding the visitor is required, the server cluster may contact the server cluster having the first session allocated thereto, e.g. in order to obtain the required information regarding the visitor, or in order to 'borrow' the cluster cache database of the server cluster having the first session allocated thereto for storing information collected during the visit of the second session. As an alternative, the second session may be reallocated to the server cluster having the first session allocated thereto. In any event, it is ensured that the information collected during the visit of the first session, as well as the information collected during the visit of the second session is associated with the visitor, and that all of the collected information is eventually stored together in a central database.

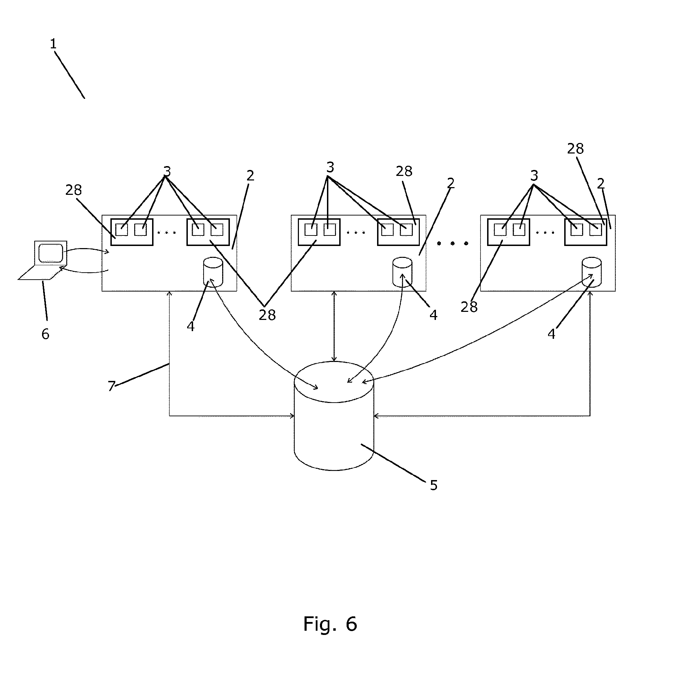

Fig. 6 is a diagrammatic view of a system 1 according to a fourth embodiment of the invention. The system of Fig. 6 is very similar to the system 1 of Fig. 1, and it will therefore not be described in detail here.

In Fig. 6 the servers 3 of the server clusters 2 are arranged in server groups 28. Two servers 3 are illustrated in each server group 28, but it should be noted that three or more servers 3 could be arranged in one or more of the server groups 28. The servers 3 of a given server group 28 are arranged to serve one or more particular websites. Thus, when a visitor accesses a website and requests content via a client device 6, the request is handled by the servers 3 which belong to the server group 28, which is arranged to serve that specific website. However, all of the servers 3 belonging to a server cluster 2 communicate with the cluster cache database 4 of the server cluster 2, as described above with reference to Fig. 1.

The servers 3 of a specific server group 28 may be placed behind a load balancer arranged to balance the load among the servers 3 belonging to the server group 28.

## Claims

1. A method for collecting online analytics data, using a system comprising two or more server clusters, each server cluster comprising two or more servers and at least one cluster cache database, and a central database, the method comprising the steps of:
- a visitor accessing a website, and requesting content of the website,
- the system allocating the visitor to one of the server clusters,
- the system delivering requested content to the visitor, via one or more of the servers of the server cluster to which the visitor is allocated,
- monitoring navigations and/or actions performed by the visitor at the website, thereby collecting information regarding navigations and/or actions performed by the visitor, by means of the servers of the server cluster to which the visitor is allocated, and storing said information in the corresponding cluster cache database, and
- when the visit by the visitor to the website has been completed, communicating the collected and stored information to the central database, and storing the collected information in the central database.

2. A method according to claim 1, further comprising the step of deleting the collected information from the cluster cache database when the information has been communicated to the central database.

3. A method according to claim 1 or 2, further comprising the steps of:
- after allocating the visitor to a server cluster, one or more of the servers of the server cluster forwarding a request to the central database in order to identify the visitor, and
- the central database returning information regarding the visitor to the server cluster.

4. A method according to claim 3, further comprising the step of storing the received information regarding the visitor in the cluster cache database of the server cluster, along with the collected information regarding navigations and/or actions performed by the visitor.

5. A method according to any of the preceding claims, further comprising the steps of:
- the visitor accessing the website, thereby starting a second session,
- the system allocating the visitor to one of the server clusters,
- the server cluster to which the visitor is allocated requesting information regarding the visitor from the central database,
- the central database returning information regarding which server cluster the first session of the visitor is allocated to, and storing said information in the cluster cache database of the server cluster having the second session of the visitor allocated thereto.

6. A method according to claim 5, further comprising the step of the server cluster having the second session of the visitor allocated thereto requesting information regarding the visitor from the server cluster having the first session of the visitor allocated thereto.

7. A method according to claim 5 or 6, further comprising the step of storing information regarding the second session of the visitor in the cluster cache database of the server cluster having the first session of the visitor allocated thereto, or moving the visitor to said server cluster.

8. A method according to any of claims 5-7, wherein engagement automation information regarding the visitor is stored at the server cluster having the first session of the visitor allocated thereto, the method further comprising the step of the server cluster having the second session of the visitor allocated thereto requesting engagement automation information from the server cluster having the first session of the visitor allocated thereto.

9. A method according to any of the preceding claims, further comprising the step of analysing information regarding the visitor stored in the central database.

10. A method according to claim 9, further comprising the step of automatically modifying the website based on the result of the analysis and/or aggregated information.

11. A method according to any of the preceding claims, further comprising the step of storing information regarding offline interactions and/or outcomes of online and/or offline interactions between the visitor and an owner of the website in the central database.

12. A system for collecting online analytics data, the system comprising:
- two or more server clusters, each server cluster comprising:
- two or more servers, said servers being arranged to deliver content of at least one website to visitors visiting the website(s), and to collect information regarding navigations and/or actions performed by visitors visiting the website(s), and
- a cluster cache database,
the system further comprising:
- a central database arranged to communicate with each of the server clusters, and to store information regarding navigations and/or actions performed by visitors visiting the website(s), said information being collected by the servers of the server clusters.

13. A system according to claim 12, wherein the central database is further arranged to store engagement automation information.

14. A system according to claim 12 or 13, wherein the central database is arranged to communicate information regarding visitors visiting the website to the server clusters upon request.

15. A system according to any of claims 12-14, wherein the cluster cache database is or forms part of a session state server.
